(19) **Europäisches Patentamt / European Patent Office / Office européen des brevets**

(11) **EP 4 029 323 B1**

(12) # EUROPEAN PATENT SPECIFICATION

(45) Date of publication and mention of the grant of the patent:
**21.08.2024 Bulletin 2024/34**

(21) Application number: **19784012.7**

(22) Date of filing: **02.10.2019**

(51) International Patent Classification (IPC):
**H04W 52/32** (2009.01) **H04W 52/36** (2009.01)
**H04W 52/38** (2009.01) **H04W 52/24** (2009.01)
**H04W 52/28** (2009.01)

(52) Cooperative Patent Classification (CPC):
**H04W 52/367; H04W 52/327; H04W 52/383;**
H04W 52/242; H04W 52/247; H04W 52/283

(86) International application number:
**PCT/EP2019/076672**

(87) International publication number:
**WO 2021/063493 (08.04.2021 Gazette 2021/14)**

(54) **FIRST AND SECOND COMMUNICATION DEVICES FOR POWER CONTROL IN GROUPCAST COMMUNICATION**

ERSTE UND ZWEITE KOMMUNIKATIONSVORRICHTUNGEN ZUR LEISTUNGSSTEUERUNG IN EINER GROUPCAST-KOMMUNIKATION

PREMIER ET SECOND DISPOSITIFS DE COMMUNICATION POUR COMMANDE DE PUISSANCE DANS UNE COMMUNICATION PAR DIFFUSION DE GROUPE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.07.2022 Bulletin 2022/29**

(73) Proprietor: **Huawei Technologies Co., Ltd.**
**Longgang District**
**Shenzhen, Guangdong**
**518129 (CN)**

(72) Inventors:
• **ABBAS, Taimoor**
**16440 Kista (SE)**
• **LINDOFF, Bengt**
**16440 Kista (SE)**
• **CLAESON, Gustaf**
**16440 Kista (SE)**

(74) Representative: **Gill Jennings & Every LLP**
**The Broadgate Tower**
**20 Primrose Street**
**London EC2A 2ES (GB)**

(56) References cited:
• **MCC SUPPORT: "Draft Report of 3GPP TSG RAN WG1 #98 v0.2.0 (Prague, Czech Rep, 26th - 30th August 2019)"**, vol. RAN WG1, no. Chongqing, China; 20191014 - 20191018, 11 September 2019 (2019-09-11), XP051782882, Retrieved from the Internet <URL:http://www.3gpp.org/ftp/tsg_ran/WG1_RL 1/TSGR1_98/Report/Draft_Minutes_report_RAN 1%2398_v020.zip> [retrieved on 20190911]
• **MEDIATEK INC: "Physical layer procedures for sidelink"**, vol. RAN WG1, no. Prague, CZ; 20190826 - 20190830, 17 August 2019 (2019-08-17), XP051765010, Retrieved from the Internet <URL:http://www.3gpp.org/ftp/tsg_ran/WG1_RL 1/TSGR1_98/Docs/R1-1908401.zip> [retrieved on 20190817]
• **CONVIDA WIRELESS: "On HARQ and Power Control for NR V2X Sidelink"**, vol. RAN WG1, no. Prague, CZ; 20190826 - 20190830, 17 August 2019 (2019-08-17), XP051766025, Retrieved from the Internet <URL:http://www.3gpp.org/ftp/tsg_ran/WG1_RL 1/TSGR1_98/Docs/R1-1909420.zip> [retrieved on 20190817]

**(Cont. next page)**

- INTERDIGITAL ET AL: "Physical Layer Procedures for NR V2X Sidelink", vol. RAN WG1, no. Prague, CZ; 20190826 - 20190830, 16 August 2019 (2019-08-16), XP051765636, Retrieved from the Internet <URL:http://www.3gpp.org/ftp/tsg_ran/WG1_RL 1/TSGR1_98/Docs/R1-1909032.zip> [retrieved on 20190816]
- LENOVO ET AL: "Discussion on physical layer procedures for NR sidelink", vol. RAN WG1, no. Prague, CZ; 20190826 - 20190830, 16 August 2019 (2019-08-16), XP051765341, Retrieved from the Internet <URL:http://www.3gpp.org/ftp/tsg_ran/WG1_RL 1/TSGR1_98/Docs/R1-1908733.zip> [retrieved on 20190816]
- INTERDIGITAL INC: "Discussion on Physical Layer Procedures for NR V2X Sidelink", vol. RAN WG1, no. Athens, Greece; 20190225 - 20190301, 16 February 2019 (2019-02-16), XP051600289, Retrieved from the Internet <URL:http://www.3gpp.org/ftp/tsg%5Fran/WG1 %5FRL1/TSGR1%5F96/Docs/R1%2D1902596%2 Ezip> [retrieved on 20190216]
- HUAWEI ET AL: "Sidelink physical layer procedures for NR V2X", vol. RAN WG1, no. Athens, Greece; 20190225 - 20190301, 15 February 2019 (2019-02-15), XP051599234, Retrieved from the Internet <URL:http://www.3gpp.org/ftp/tsg%5Fran/WG1 %5FRL1/TSGR1%5F96/Docs/R1%2D1901537%2 Ezip> [retrieved on 20190215]

## Description

## Technical Field

The disclosure relates to a first communication device and a second communication device for power control in groupcast communication. Furthermore, the disclosure also relates to corresponding methods, and a computer program.

## Background

Vehicle-to-anything (V2X) communications, is one of the key enablers for future cooperative intelligent transportation systems (C-ITS). The term V2X jointly represents vehicles communicating with anything on the road or along the road.

A new interface named PC5 or sidelink was introduced in long term evolution (LTE) that supports direct communication in the 5.9GHz band. Sidelink is specifically designed to meet the requirements for advanced safety applications. Compared to LTE, which supports broadcast and unicast mode communication, new radio (NR) sidelink shall in addition support groupcast communication.

Groupcast communication is simultaneous data transmission to a group of user equipments (UEs). In groupcast communication there is at least one source or transmitter UE and multiple destination or receiver UEs.

For groupcast there exist different scenarios, with examples such as Intersection movement assistance and Platooning. Further in some cases it is important that all UEs within the group can be reached with the groupcast transmission while in other cases only a certain range from the source UE is of importance and outside the range the transmission is best effort.

MCC SUPPORT, "Draft Report of 3GPP TSG RAN WG1 #98 v0.2.0 (Prague, Czech Rep, 26th - 30th August 2019)", vol. RAN WG1, no. Chongqing, China; 20191014 - 20191018, (20190911), 3GPP DRAFT; DRAFT_MINUTES_REPORT_RAN1#98 V020, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, relates to MCC support.

MEDIATEK INC, "Physical layer procedures for sidelink", vol. RAN WG1, no. Prague, CZ; 20190826 - 20190830, (20190817), 3GPP DRAFT; R1-1908401_V2X_PHYSICAL_LAYER_PROCEDURE_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, relates to physical layer procedures for sidelink.

CONVIDA WIRELESS, "On HARQ and Power Control for NR V2X Sidelink", vol. RAN WG1, no. Prague, CZ; 20190826 - 20190830, (20190817), 3GPP DRAFT; R1-1909420_ON_HARQ_POWERCONTRL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, relates to HARQ and power control for NR V2X sidelink.

INTERDIGITAL ET AL, "Physical Layer Procedures for NR V2X Sidelink", vol. RAN WG1, no. Prague, CZ; 20190826 - 20190830, (20190816), 3GPP DRAFT; R1-1909032 ON PHYSICAL LAYER PROCEDURES FOR NR V2X SIDELINK_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS, relates to physical layer procedures for NR V2X sidelink.

## Summary

An objective of implementations of the disclosure is to provide a solution which mitigates or solves the drawbacks and problems of conventional solutions.

The invention has been defined in the independent claims. Further specific technical features have been defined in the dependent claims. Dependent claims constitute embodiments of the invention. The following aspects describe salient features of the claims individually.

According to a first aspect of the disclosure, the above mentioned and other objectives are achieved with a first communication device for a wireless communication system, the first communication device being configured for groupcast communication with a set of second communication devices, and further being configured to

   obtain one or more received signal qualities from respective one or more second communication devices of a reporting subset in the set of second communication devices;
   determine at least one path loss value for the reporting subset based on the one or more obtained received signal qualities.

The groupcast communication can in this implementation e.g. be NR groupcast communication over sidelinks between the first communication device and the set of second communication devices.

The reporting subset can be smaller than the set of second communication devices, i.e. the reporting subset can comprise fewer second communication devices than the set of second communication devices.

An advantage of the first communication device according to the first aspect is that only a subset of the second communication devices reports their received signal qualities to the first communication device. Signaling overhead can hence be reduced which reduces required scheduling resources and decreases interference. Furthermore, the reporting subset allows the reported received signal qualities to be limited to only received signal qualities from relevant second communication devices.

In an implementation form of a first communication device according to the first aspect, the reporting subset is determined based on a configuration received from a network access node or a road side unit.

The received configuration may be based on a spatial distance between the first communication device and a second communication device in the reporting subset and a required transmission range. The received configuration may further be based on a groupcast use case for the groupcast communication and/or a relative position within the group.

An advantage with this implementation form is that the network access node or the road side unit can configure the reporting subset in the groupcast communication. Thereby, optimizing system capacity and/or system performance.

In an implementation form of a first communication device according to the first aspect, the reporting subset is determined based on one or more received signal qualities received during a time window.

An advantage with this implementation form is that the reporting subset in the first communication device can be defined without prior configuration signaling. Thereby, reducing overhead signaling in the system.

In an implementation form of a first communication device according to the first aspect, the first communication device is further configured to

determine a transmission power value for the groupcast communication based on the at least one path loss value.

An advantage with this implementation form is that optimized transmission power can be used for the groupcast transmission. Thereby, reducing overall system interference.

In an implementation form of a first communication device according to the first aspect, the first communication device is further configured to

perform a groupcast communication transmission based on the determined transmission power value.

An advantage with this implementation form is that optimized transmission power can be used for the groupcast transmission. Thereby, reducing overall system interference.

In an implementation form of a first communication device according to the first aspect, the first communication device is further configured to

perform the groupcast communication transmission in a physical sidelink control channel or in a physical sidelink shared channel.

The physical sidelink control channel and the physical sidelink shared channel may be channels according to the 3GPP 5G-NR standard.

An advantage with this implementation form is that transmission is performed in defined channels reducing the implementation complexity.

In an implementation form of a first communication device according to the first aspect, the first communication device is further configured to

determine a single common path loss value for the reporting subset based on a first function and the received signal qualities; and
determine the transmission power value based on the single common path loss value.

An advantage with this implementation form is that the transmission power value can be derived in a well-defined way, improving the robustness and reliability of the system.

In an implementation form of a first communication device according to the first aspect, the first communication device is further configured to

determine a path loss value for each second communication device in the reporting subset; and
determine the transmission power value based on a second function and the path loss values for each second communication device in the reporting subset.

An advantage with this implementation form is that the transmission power value can be derived in a well-defined way, improving the robustness and reliability of the system.

In an implementation form of a first communication device according to the first aspect, the first communication device is further configured to

to define the reporting subset per beam, per beam pair link, or per QCL configuration.

An advantage with this implementation form is that the same procedure can be used also when the first communication device performs beam transmission, implying same implementation can be reused in the first communication device. Thereby, reducing implementation complexity.

In an implementation form of a first communication device according to the first aspect, the first communication device is further configured to

determine the reporting subset based on a spatial distance between the first communication device and a second communication device in the reporting subset and a required transmission range.

An advantage with this implementation form is that the first communication device itself can define the reporting subset. Thereby, reducing overall signaling in the network. Furthermore, by determining the reporting subset based on the spatial distance and the required transmission range, the first communication device can limit the reporting subset to only include relevant second communication devices, e.g. second communication devices close to the required transmission range. Thereby, allowing the first communication device to determine a path loss value which is relevant for the specific required transmission range.

In an implementation form of a first communication device according to the first aspect, the first communication device is further configured to

determine the reporting subset further based on a groupcast use case for the reporting subset.

An advantage with this implementation form is that the first communication device itself can define the reporting subset. Thereby, reducing overall signaling in the network.

In an implementation form of a first communication device according to the first aspect, the first communication device is further configured to

transmit a measurement configuration for the groupcast communication to at least one second communication device, wherein the measurement configuration indicates at least one reporting condition.

An advantage with this implementation form is that the first communication device can configure the second communication device, so that the reporting subset can be different. Thereby, reducing overall report signaling in the system.

In an implementation form of a first communication device according to the first aspect, the received signal quality is at least one of:

a reference signal received power,
a signal-to-noise ratio, and
a reference signal received quality.

An advantage with this implementation form is that the received signal quality is well-defined, making the system more reliable and robust.

According to a second aspect of the disclosure, the above mentioned and other objectives are achieved with a method for a first communication device configured for groupcast communication with a set of second communication devices, the method comprises

obtaining one or more received signal qualities from respective one or more second communication devices of a reporting subset in the set of second communication devices;
determining at least one path loss value for the reporting subset based on the one or more obtained received signal qualities.

The method according to the third aspect can be extended into implementation forms corresponding to the implementation forms of the first communication device according to the first aspect. Hence, an implementation form of the method comprises the feature(s) of the corresponding implementation form of the first communication device.

The advantages of the methods according to the third aspect are the same as those for the corresponding implementation forms of the first communication device according to the first aspect.

The disclosure also relates to a computer program, characterized in program code, which when run by at least one processor causes said at least one processor to execute any method according to implementations of the disclosure. Further, the disclosure also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the implementations of the disclosure will be apparent from the following detailed description.

**Brief Description of the Drawings**

The appended drawings are intended to clarify and explain different implementations of the disclosure, in which:

- - Fig. 1 shows a first communication device according to an implementation of the disclosure;
- - Fig. 2 shows a method for a first communication device according to an implementation of the disclosure;
- - Fig. 3 shows a second communication device according to an implementation of the disclosure;
- - Fig. 4 shows a method for a second communication device according to an implementation of the disclosure;
- - Fig. 5 shows a wireless communication system according to an implementation of the disclosure;
- - Fig. 6 shows a method according to an implementation of the disclosure;
- - Fig. 7 shows a method according to an implementation of the disclosure; and
- - Figs. 8a-d show reporting subsets in different group cast scenarios according to implementations of the disclosure.

**Detailed Description**

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

In 3GPP RAN1 Rel-16 the work has started to define the sidelink power control procedure, where the main focus has been on the open loop power control procedures. For physical uplink shared channel (PUSCH) transmissions over the Uu interface, one of the components in the power calculation formula is path loss.

For the sidelink power control two different variants of path loss will be considered. The path loss between next generation node B (gNB) and source UE, i.e. downlink path loss, and the path loss between source UE and destination UE, i.e. sidelink path loss. The motivation to include downlink path loss is to mitigate interference to uplink reception at the gNB in the licensed bands, as a sidelink can utilize both licensed and unlicensed bands. Thus, limiting the interference to uplink transmission can be controlled at the gNB.

In the procedure for supporting unicast sidelink transmission it is agreed to report sidelink received signal quality to the source UE to derive the path loss. The power control procedure for sidelink groupcast has not yet been standardized. For open-loop power control for sidelink groupcast communication different proposals exist. According to one proposal the reference signal received power (RSRP) is reported by all the destination UEs and the source UE uses the one with the lowest RSRP. This solution has the disadvantage of signaling overhead of all the group members, which requires high amount of scheduling resources and further increase the interference.

Another proposal is to not use sidelink path loss between source UE and destination UE in case of groupcast. The motivation being that reporting cause a large signaling overhead. This solution has the obvious drawback that power is not regulated at all for the dynamic sidelink path loss component of the group members.

In another proposal, an RSRP threshold would be configured and when the RSRP is below the RSRP threshold, reporting of RSRP would be triggered. A disadvantage with this solution is that information above the RSRP threshold cannot be utilized and the power would be set unnecessary high. Furthermore, if the threshold is set high to not lose a large range above the threshold, then the threshold would not fully serve its purpose of limiting the amount of reporting.

In addition, the above mentioned proposals do not consider the case when only a specific communication range from the source UE is prioritized and hence it is not suitable to use the destination UE with lowest RSRP which may be outside the communication range.

Consequently, there is a need for solution which address all the above mentioned drawbacks. The objective of the disclosure is therefore to provide a solution that allows sidelink path loss to be considered in power control procedures with a limited signaling overhead and further in combination with a relevant transmission range target.

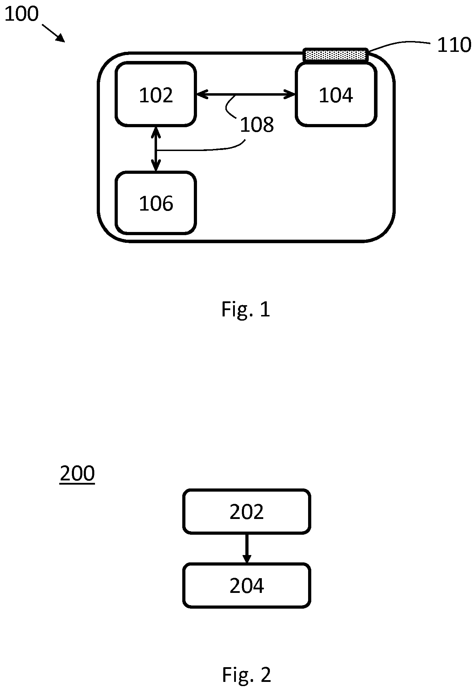

Fig. 1 shows a first communication device 100 according to an implementation of the disclosure. In the implementation shown in Fig. 1, the first communication device 100 comprises a processor 102, a transceiver 104 and a memory 106. The processor 102 is coupled to the transceiver 104 and the memory 106 by communication means 108 known in the art. The first communication device 100 further comprises an antenna or antenna array 110 coupled to the transceiver 104, which means that the first communication device 100 is configured for wireless communications in a wireless communication system.

That the first communication device 100 is configured to perform certain actions can in this disclosure be understood to mean that the first communication device 100 comprises suitable means, such as e.g. the processor 102 and the transceiver 104, configured to perform said actions.

According to implementations of the disclosure the first communication device 100 is configured for groupcast communication with a set of second communication devices 300a, 300b,..., 300n and further configured to obtain one or more received signal qualities from respective one or more second communication devices of a reporting subset 300a', 300b',..., 300n' in the set of second communication devices 300a, 300b,..., 300n. The first communication device 100 is further configured to determine at least one path loss value for the reporting subset 300a', 300b',..., 300n' based on the one or more obtained received signal qualities.

Fig. 2 shows a flow chart of a corresponding method 200 which may be executed in a first communication device 100, such as the one shown in Fig. 1, configured for groupcast communication with a set of second communication devices 300a, 300b,..., 300n. The method 200 comprises obtaining 202 one or more received signal qualities from respective one or more second communication devices of a reporting subset 300a', 300b',..., 300n' in the set of second communication devices 300a, 300b,..., 300n. The method 200 further comprises determining 204 at least one path loss value for the reporting subset 300a', 300b',..., 300n' based on the one or more obtained received signal qualities.

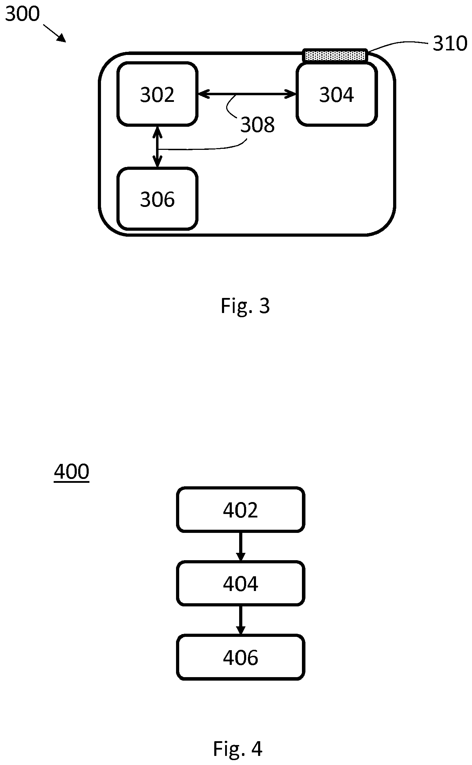

Fig. 3 shows a second communication device 300 according to an implementation of the disclosure. In the implementation shown in Fig. 3, the second communication device 300 comprises a processor 302, a transceiver 304 and a memory 306. The processor 302 is coupled to the transceiver 304 and the memory 306 by communication means 308 known in the art. The second communication device 300 further comprises an antenna or antenna array 310 coupled to the transceiver 304, which means that the second communication device 300 is configured for wireless communications in a wireless communication system.

That the second communication device 300 is configured to perform certain actions can in this disclosure be understood to mean that the second communication device 300 comprises suitable means, such as e.g. the processor 302 and the transceiver 304, configured to perform said actions.

According to implementations of the disclosure the second communication device 300 is configured for groupcast communication with a first communication device 100, and further configured to obtain a measurement configuration 520 for the groupcast communication. The measurement configuration 520 indicates at least one reporting condition. The second communication device 300 is further configured to measure received signal quality according to the measurement configuration and transmit the measured received signal quality to the first communication device 100 upon determine that the reporting condition is fulfilled.

Fig. 4 shows a flow chart of a corresponding method 400 which may be executed in a second communication device 300, such as the one shown in Fig. 3, configured for groupcast communication with a first communication device 100. The method 400 comprises obtaining 402 a measurement configuration 520 for the groupcast communication. The measurement configuration 520 indicates at least one reporting condition. The method 400 further comprises measuring 404 received signal quality according to the measurement configuration and transmitting 406 the measured received signal quality to the first communication device 100 upon determine that the reporting condition is fulfilled.

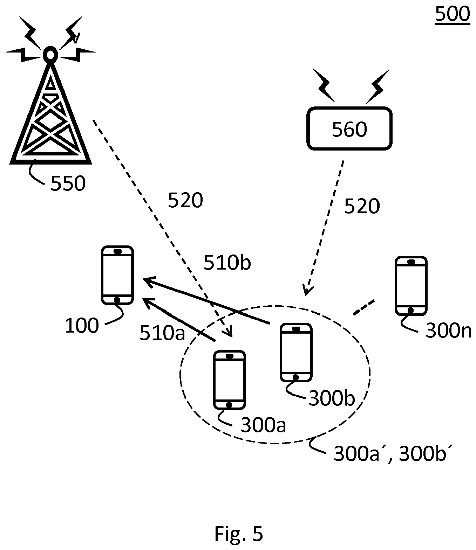

Fig. 5 shows a wireless communication system 500 according to an implementation of the disclosure. The wireless communication system 500 comprises a first communication device 100 and a set of second communication devices 300a, 300b,..., 300n, all configured to operate in the wireless communication system 500. In the implementation shown in Fig. 5, the first communication device 100 and the set of second communication devices 300a, 300b,..., 300n are all client devices such as UEs. However, one or more of the first communication device 100 and the set of second communication devices 300a, 300b,..., 300n may in implementations instead be network access nodes or road side units. The first communication device 100 is configured for groupcast communication with the set of second communication devices 300a, 300b,..., 300n, e.g. over sidelinks (not shown in Fig. 5). In Fig. 5 it is assumed that the first communication device 100 is a source communication device of a groupcast communication and the set of first communication devices 100a, 100b, ..., 100n are destination communication devices.

The wireless communication system 500 may further comprise one or more network access nodes and/or one or more road site units, with which one or more of the first communication device 100 and the set of second communication devices 300a, 300b,..., 300n may communicate. In the implementation shown in Fig. 5, the wireless communication system 500 comprises one network access node 550 and one road side unit 560. The network access node 550 may be any type of base station such as e.g. a gNB in a radio access network (RAN). The road side unit 560 may be any device/node deployed along roads to improve vehicular network performance, as well as extend the coverage. The road side unit 560 may be a stand-alone device/node or may be integrated with e.g. a network access node.

According to implementations of the disclosure a reporting subset 300a', 300b',..., 300n' is determined from the set of second communication devices 300a, 300b,..., 300n, i.e. one or more of the second communication devices in the set of second communication devices 300a, 300b,..., 300n is determined to be included in the reporting subset 300a', 300b',..., 300n'. The number of second communication devices in the reporting subset 300a', 300b',..., 300n' is smaller than the number of second communication devices in the set of second communication devices 300a, 300b,..., 300n. The second communication devices in the reporting subset 300a', 300b',..., 300n' are configured to provide received signal quality to the first communication device 100. The configuration to provide received signal quality may be provided to the second communication devices in a measurement configuration 520 from the first communication device 100, the network access node 550 or the road side unit 560. Fig. 5 shows a non-limiting example of the optional transmission of measurement configurations 520 to one or more of the second communication devices 300.

Based on the one or more received signal qualities obtained from the reporting subset 300a', 300b',..., 300n', the first communication device 100 may determine a transmission power value to use for a groupcast communication to the set of second communication devices 300a, 300b,..., 300n. In the implementation shown in Fig. 5, two second communication devices 300a, 300b in the set of second communication devices 300a, 300b,..., 300n are determined to be the reporting subset 300a', 300b'. Hence, the first communication device 100 obtains two received signal qualities 510a, 510b from the reporting subset 300a', 300b'. One received signal quality 510a indicating the received signal quality for one second communication device 300a and the other received signal quality 510b indicating the received signal quality for the other second communication device 300b. Based on the obtained received signal qualities 510a, 510b, the first communication device 100 determines a path loss value which in turn may be used to determine a transmission power value for the groupcast communication. When the first communication device 100 performs the groupcast communication transmission to the set of second communication devices 300a, 300b,..., 300n, the first communication device 100 uses the determined transmission power value for the groupcast communication transmission.

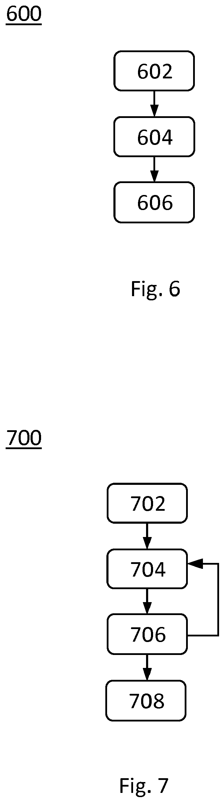

Fig. 6 shows a flow chart of a method 600 for determining a transmission power value for a groupcast communication according to implementations of the disclosure. The method 600 may be performed in the first communication device 100 when configured for groupcast communication with the set of second communication devices 300a, 300b,..., 300n.

In step 602, the first communication device 100 obtains one or more received signal qualities from respective one or more second communication devices of a reporting subset 300a', 300b',..., 300n' in the set of second communication devices 300a, 300b,..., 300n. The one or more received signal qualities obtained in step 602 may in implementations be obtained in response to a measurement configuration 520 transmitted from the first communication device 100 to one or more of the second communication device 300. In such implementations, the first communication device 100 has hence transmitted a measurement configuration 520 for the groupcast communication to at least one second communication device 300. The measurement configuration 520 may indicate at least one reporting condition based on which the second communication device 300 may determine whether to transmit a received signal quality or not.

The received signal quality may be at least one of a reference signal received power (RSRP), a signal-to-noise ratio (SNR), and a reference signal received quality (RSRQ). The obtained received signal qualities may further be filtered or unfiltered. When the obtained received signal qualities are unfiltered values, the first communication device 100 may use the unfiltered values or perform filtering of the unfiltered values. The filtering may e.g. comprise layer 3 filtering of reported unfiltered layer 1 RSRP values from a second communication device 300. The second communication devices in the reporting subset 300a', 300b',..., 300n' may determine the received signal quality in a conventional way based on e.g. measurement of reference signals received from the first communication device 100.

The reporting subset 300a', 300b',..., 300n' may be determined by at least one of the first communication device 100, a network access node 550, and a road side unit 560. The network access node 550 and the road side unit 560 may be serving one or more of the first communication device 100 and the set of second communication devices 300a, 300b,..., 300n. The determined reporting subset 300a', 300b',..., 300n' may be an initial reporting subset 300a', 300b',..., 300n' which may be updated and/or reconfigured by the first communication device 100, the network access node 550, or the road side unit 560 using e.g. radio resource control (RRC) signaling or physical layer signaling such as downlink control information (DCI)/sidelink control information (SCI) or medium access control (MAC) control element (CE).

When the reporting subset 300a', 300b',..., 300n' is determined by the network access node 550 or the road side unit 560, the network access node 550 or the road side unit 560 may provide information about the determined reporting subset 300a', 300b',..., 300n' to the first communication device 100 in a configuration. Thus, the first communication device 100 may in implementations determine the reporting subset 300a', 300b',..., 300n' based on a configuration received from the network access node 550 or the road side unit 560.

According to implementations of the disclosure the first communication device 100 may further determine the reporting subset 300a', 300b',..., 300n' based on one or more received signal qualities received during a time window. In this case, the first communication device 100 may collect the one or more received signal qualities obtained from the set of second communication devices 300a, 300b,..., 300n within the time window and determine the reporting subset 300a', 300b',..., 300n' to be the second communication devices who provided received signal quality during the time window. In implementations where the first communication device 100 has obtained the configuration for a reporting subset 300a', 300b',..., 300n' from the network access node 550 or the road side unit 560, the first communication device 100 may determine the reporting subset 300a', 300b',..., 300n' to be the second communication devices in the reporting subset 300a', 300b',..., 300n' who provided received signal quality during the time window. Thus, the first communication device 100 may determine the reporting subset 300a', 300b',..., 300n' to be smaller than the reporting subset 300a', 300b',..., 300n' configured by the network access node 550 or the road side unit 560. The duration of the time window may be preconfigured, e.g. in the standard, or configured by the first communication device 100 based on information derived or obtained from another device or node.

When the groupcast communication is performed using beams, the first communication device 100 may define the reporting subset 300a', 300b',..., 300n' per beam, per beam pair link, or per quasi co-location (QCL) configuration. The reporting subset 300a', 300b',..., 300n' may e.g. be defined per beam specific reference signal. A beam aims to cover a subset of the set of second communication devices 300a, 300b,..., 300n and within this subset the reporting subset 300a', 300b',..., 300n' is further defined to report received signal quality. The received signal quality is in this case hence related to a specific beam. Thus, the groupcast communication may consist of several beams, where a beam may be identified, e.g. based on QCL configuration, and where each beam may be associated with its own reporting subset 300a', 300b',..., 300n'.

According to implementations of the disclosure the first communication device 100 may determine the reporting subset 300a', 300b',..., 300n' based on a spatial distance between the first communication device 100 and a second communication device in the set of second communication devices 300a, 300b,..., 300n and a required transmission range. For example, the first communication device 100 may determine that only second communication devices 300 which are in proximity to the required transmission range are included in the reporting subset 300a', 300b',..., 300n'. In this way, the first communication device 100 can obtain received signal qualities from the second communication devices 300 in the set of second communication devices 300a, 300b,..., 300n which are close to the boarder of the transmission range, i.e. close to the range that the first communication device 100 is expected to reach/cover with the groupcast transmission. The required transmission range may be a preconfigured range inside which it is important that the groupcast transmission is successful, while outside the range the transmission is "best effort". The required transmission range may further be referred to as a minimum required communication range. The spatial distance between the first communication device 100 and the second communication device 300 may e.g. be determined based on a location of the second communication device 300 reported to the first communication device 100 in a physical layer signaling, e.g. SCI, or higher layer signaling such as e.g. MAC, RRC, or application layer signaling. The spatial distance may further be obtained from an application such as e.g. an V2X application in the first communication device 100.

The first communication device 100 may further determine the reporting subset 300a', 300b',..., 300n' based on a groupcast use case for the reporting subset 300a', 300b',..., 300n'. In this way, the first communication device 100 can determine to only obtain received signal qualities from second communication devices 300 in a specific groupcast use case. For example, for groupcast in platooning the groupcast use case may be associated with a relative position of the second communication device 300 within the group.

Additional information may be considered by the first communication device 100 when determine the reporting subset 300a', 300b',..., 300n'. The reporting subset 300a', 300b',..., 300n' may hence be determined based on additional input parameters. The additional input parameters may e.g. be any one or more of the following parameters:

- Group size
- Relative position within the group
- Direction of the first communication device 100 relative to the second communication device 300, a specific QCL configuration (Beam)
- Speed of group or individual speed of each member in the group
- Vehicle Type
- Antenna Location(s) on the second communication device 300

The network access node 550 or the road side unit 560 may determine the reporting subset 300a', 300b',..., 300n' in a similar way as the first communication device 100, i.e. based on the spatial distance between the first communication device 100 and the second communication device in the reporting subset 300a', 300b',..., 300n' and the required transmission rang, as well as based on the groupcast use case for the reporting subset 300a', 300b',..., 300n' and the additional input parameters listed above.

In step 604, the first communication device 100 determines at least one path loss value for the reporting subset 300a', 300b',..., 300n' based on the one or more obtained received signal qualities and further determines a transmission power value for the groupcast communication based on the at least one path loss value. In implementations, the first communication device 100 may determine a single common path loss value for the reporting subset 300a', 300b',..., 300n' based on a first function and the received signal qualities. The first function may be the mean, weighted mean, median, minimum or maximum of the received signal qualities for the reporting subset 300a', 300b',..., 300n'. The first communication device 100 then determines the transmission power value based on the single common path loss value.

In implementations where the received signal qualities are RSRP values, the single common path loss value $PL_{subset}$ may be determined using equation 1, where $n$ is the size of the reporting subset 300a', 300b',..., 300n' and $g1$ is the first function. As described above, if the received signal qualities are unfiltered layer 1 RSRP values, the first communication device 100 may perform layer 3 filtering of the reported unfiltered layer 1 RSRP values and use the filtered RSRP values when determining the single common path loss value $PL_{subset}$.

$$PL_{subset} = referenceSignalPower - g1(RSRP\{300a' \ldots 300n'\}) \qquad \text{Equation 1}$$

The determined single common path loss value $PL_{subset}$ may then be used in a transmission power formula to determine the transmission power value for the groupcast communication. The transmission power formula may be based on the transmission power formula according to the 3GPP NR standard and may hence when the groupcast communication transmission is performed in a physical sidelink shared channel (PSSCH), be expressed as:

$$P_{PSSCH}(i,j,q_d) = \min\left\{P_{CMAX,PSSCH}(i), P_{O\_PSSCH}(j) + 10\log_{10}\left(2^{\mu}.M_{PSSCH}(i)\right) + \alpha_{PSSCH}(j).PL_{subset}(q_d)\right\}$$

$$\text{Equation 2}$$

A similar transmission power formula may be used when the groupcast communication transmission is performed in a physical sidelink control channel (PSCCH) but with PSCCH specific factors.

In implementations, the first communication device 100 may in step 604 instead determine a path loss value for each second communication device in the reporting subset 300a', 300b',..., 300n' and then determine the transmission power value based on a second function and the path loss values for each second communication device in the reporting subset 300a', 300b',..., 300n'. The second function may be the mean, weighted mean, median, minimum or maximum of the path loss values for each second communication device in the reporting subset 300a', 300b',..., 300n'.

In implementations where the received signal quality is an RSRP value, the path loss value $PL_{300_x}$ for each second communication device in the reporting subset 300a', 300b',..., 300n' may be determined using equation 3, where x is 1, 2,..., n and n is the size of the reporting subset 300a', 300b',..., 300n'.

$$PL_{300_x} = referenceSignalPower - RSRP_{300_x} \qquad \text{Equation 3}$$

The determined respective path loss value $PL_{300x}$ for each second communication device in the reporting subset 300a', 300b',..., 300n' may then be used in a transmission power formula to determine the transmission power value for the groupcast communication. The transmission power formula may include the second function g2 which considers the path loss value $PL_{300x}$ for each second communication device in the reporting subset 300a', 300b',..., 300n', where the second function $g2$ may be the mean, weighted mean, median, minimum or maximum of the path loss values $PL_{300x}$ for each second communication device in the reporting subset 300a', 300b',..., 300n'. In implementations where the groupcast communication transmission is performed in the PSSCH and the transmission power formula is based on the transmission power formula according to the 3GPP NR standard, the transmission formula may be expressed as:

$$P_{PSSCH}(i,j,q_d) = \min\left\{P_{CMAX,PSSCH}(i), P_{O\_PSSCH}(j) + 10\log_{10}\left(2^{\mu}.M_{PSSCH}(i)\right) + \right.$$
$$\left. \alpha_{PSSCH}(j).g2(PL_{300_1,\ldots,300_n}(q_d))\right\} \qquad \text{Equation 4}$$

In step 606, the first communication device 100 perform a groupcast communication transmission based on the determined transmission power value. The first communication device 100 may e.g. perform the groupcast communication transmission in the PSCCH or in the PSSCH. By performing the groupcast communication transmission based on the determined transmission power value, the power of the groupcast communication transmission can be effectively adjusted to the path losses experienced by the reporting subset 300a', 300b',..., 300n' in the set of second communication devices 300a, 300b,..., 300n.

Fig. 7 shows a flow chart of a method 700 for transmitting measured received signal quality according to implementations of the disclosure. The method 700 may be performed in the second communication device 300 when configured for groupcast communication with the first communication device 100. In step 702, the second communication device 300 obtains a measurement configuration 520 for the groupcast communication, wherein the measurement configuration 520 indicates at least one reporting condition. The second communication device 300 may obtain the measurement configuration 520 from the first communication device 100, a network access node 550, or a road side unit 560.

In step 704, the second communication device 300 measures received signal quality according to the measurement configuration 520 obtained in step 702. The received signal quality may be at least one of a RSRP, a SNR, and a RSRQ. The second communication device 300 may measure the received signal quality continuously or at predetermined intervals. The second communication device 300 may measure the received signal quality in a conventional way based on e.g. measurement of reference signals received from the first communication device 100.

In step 706, the second communication device 300 monitors the at least one reporting condition indicated in the measurement configuration 520 to determine whether the reporting condition is fulfilled. In implementations, the reporting condition may be associated with a spatial distance between the first communication device 100 and the second communication device 300. In such implementations, determine that the reporting condition is fulfilled may comprises determine that the at least one reporting condition is fulfilled if the spatial distance between the first communication device 100 and the second communication device 300 approximately corresponds to a required transmission range. In this way, reporting can be triggered when the second communication device 300 is at a spatial distance from the first communication device 100 which is close to the required transmission range. The required transmission range may be a preconfigured range within which groupcast communication between the first communication device 100 and the second communication device 300 is possible. The spatial distance between the first communication device 100 and the second communication device 300 may e.g. be determined based on the location of the first communication device 100 reported to the second communication device 300 in a physical layer signaling, e.g. SCI, or higher layer signaling such as e.g. MAC, RRC, or application layer signaling. The spatial distance may further be obtained from an application such as e.g. an V2X application in the second communication device 300.

According to implementations of the disclosure determine that the at least one reporting condition is fulfilled in step 706 may further comprises determine that a groupcast use case for the second communication device 300 is fulfilled. In this way, reporting can be triggered depending on the group cast use case that the second communication device 300 is operating in. For example, for groupcast in platooning the groupcast use case may be associated with a relative position of the second communication device 300 within the group.

Furthermore, additional information may be considered by the second communication device 300 when determining whether the reporting condition is fulfilled. The reporting condition may hence, in addition to spatial distance and/or groupcast use case, be dependent on additional input information. The additional input parameters may e.g. be any one or more of the following parameters:

- Group size
- Relative position within the group
- Direction of the first communication device 100 relative to the second communication device 300, a specific QCL configuration (Beam)
- Speed of group or individual speed of each member in the group
- Vehicle Type
- Antenna Location(s) on the second communication device 300

Upon determining in step 706 that the at least one reporting condition is fulfilled, the second communication device 300 transmits the measured received signal quality to the first communication device 100 in step 708. The second communication device 300 may e.g. transmit the measured received signal quality in layer 1 physical control signaling or in layer 3 radio resource control signaling. When the at least one reporting condition is not fulfilled, the second communication device 300 continues to measure the received signal quality in step 704 and monitor the at least one reporting condition in step 706.

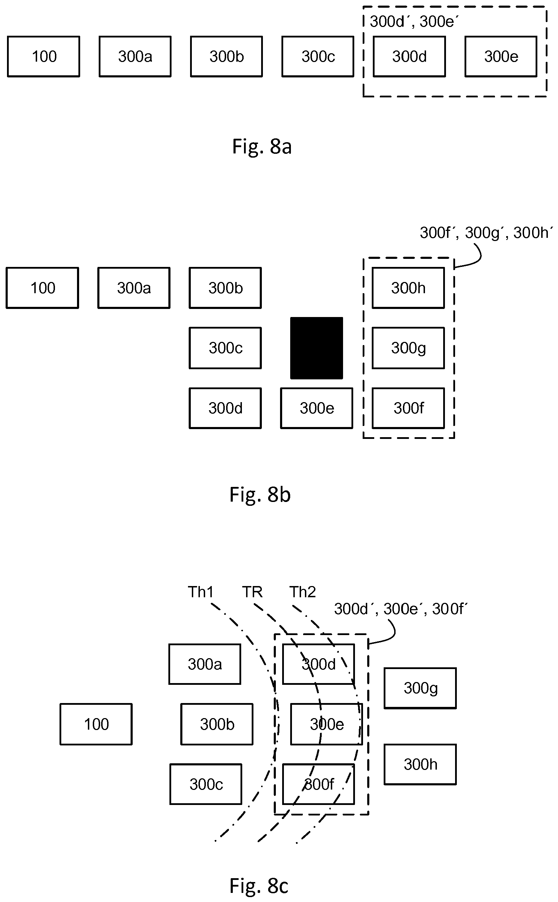

Figs. 8a-d show reporting subsets 300a', 300b',..., 300n' in different group cast scenarios according to implementations of the disclosure. Fig. 8a shows a group cast scenario where the set of second communication devices 300a, 300b, 300c, 300d, 300e are lined up after the first communication device 100, the set of second communication devices 300a, 300b, 300c, 300d, 300e may e.g. be a platoon of vehicles controlled by the first communication device 100. In the implementation shown in Fig. 8a, it is assumed that the first communication device 100 wants to reach all the members of the group when performing groupcast communication, therefore the two last second communication devices 300d, 300e positioned furthest away from the first communication device 100 are included in the reporting subset 300d', 300e'. Thus, the first communication device 100 receives the received signal qualities of the second communication devices in the set of second communication devices 300a, 300b, 300c, 300d which probably experience the highest path loss. The first communication device 100 can thereby determine the transmission power value and perform groupcast communication based on the determined transmission power such that the groupcast communication will reach all the second communication devices in the set of second communication devices 300a, 300b, 300c, 300d, 300e.

Fig. 8b also shows a group cast scenario where the set of second communication devices 300a, 300b, 300c, 300d, 300e, 300f, 300g, 300h are lined up, e.g. platooning, after the first communication device 100 and where the first communication device 100 wants to reach all the members of the group when performing groupcast communication. In the implementation shown in Fig. 8b, the last three second communication devices 300f, 300g, 300h has been determined to be the reporting subset 300f', 300g', 300h'. The last second communication device 300h in the reporting subset 300f', 300g', 300h' has line-of-sight to the first communication device 100, while the other two second communication devices 300f, 300g within the reporting subset 300f', 300g', 300h' have their reported path loss effected by a building blocking the line-of-sight, as shown in Fig. 8b. In such a situation, the reporting subset 300f', 300g', 300h' allows the path loss to be determined based on the combined information from the last three second communication devices 300f, 300g, 300h and the determined path loss will hence result in a transmission power for the groupcast communication which makes it more likely that the groupcast communication is successful, i.e. reaches all the members of the group.

Fig. 8c shows a group cast scenario where a minimum required transmission range TR is defined for a groupcast communication from the first communication device 100 to the set of second communication devices 300a, 300b, 300c, 300d, 300e, 300f, 300g, 300h. The reporting subset 300d', 300e', 300f' is determined based on the transmission range TR. Fig. 8c further shows two thresholds of a reporting condition Th1, Th2 within which the reporting condition is fulfilled, i.e. any second communication device 300 located between the first threshold of the reporting condition Th1 and the second threshold of the reporting condition Th2 will report received signal quality to the first communication device 100. Outside the transmission range the transmission is best effort and the reporting subset 300d', 300e', 300f' reflect the second communication devices 300 adjacent to the transmission range TR border. The two thresholds of the reporting condition Th1, Th2 have been selected such that the first threshold of the reporting condition Th1 is inside the transmission range TR and the second threshold of the reporting condition Th2 is outside the transmission range TR.

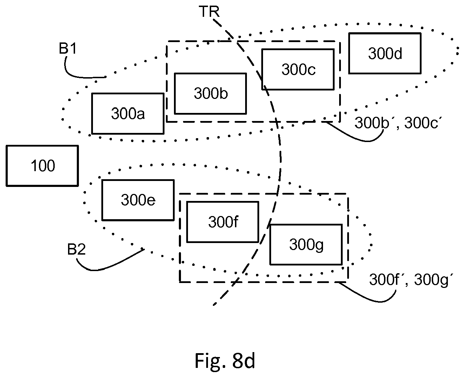

Fig. 8d shows a group cast scenario where a minimum required transmission range TR is defined for a groupcast communication and further where two different beams B1, B2 are used to target subsets of the set of second communication devices 300a, 300b, 300c, 300d, 300e, 300f, 300g. A first beam B1 is used for groupcast communication from the first communication device 100 to a first subset of second communication devices 300a, 300b, 300c, 300d, and a second beam B2 is used for groupcast communication from the first communication device 100 to a second subset of second communication devices 300e, 300f, 300g. Fig. 8d further shows that a reporting subset is defined per beam, i.e. a first reporting subset 300b', 300c' for the first beam B1 and a second reporting subset 300f', 300g' for the second beam B2. Each reporting subset may be defined based on the transmission range TR. Outside the transmission range TR the transmission is best effort and the first reporting subset 300b', 300c' and the second reporting subset 300f', 300g' reflect the second communication devices 300 adjacent to the transmission range TR.

The first communication device 100 and/or the second communication device 300 herein, may be denoted as a user device, a User Equipment (UE), a mobile station, an internet of things (IoT) device, a sensor device, a wireless terminal and/or a mobile terminal, is enabled to communicate wirelessly in a wireless communication system, sometimes also referred to as a cellular radio system. The UEs may further be referred to as mobile telephones, cellular telephones, computer tablets or laptops with wireless capability. The UEs in this context may be, for example, portable, pocket-storable, hand-held, computer-comprised, or vehicle-mounted mobile devices, enabled to communicate voice and/or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM). The UE may also be configured for communication in 3GPP related LTE and LTE-Advanced, in WiMAX and its evolution, and in fifth generation wireless technologies, such as New Radio.

However, the first communication device 100 herein may also be denoted as a radio network access node, an access network access node, an access point, or a base station, e.g. a Radio Base Station (RBS), which in some networks may be referred to as transmitter, "gNB", "gNodeB", "eNB", "eNodeB", "NodeB" or "B node", depending on the technology and terminology used. The radio network access nodes may be of different classes such as e.g. macro eNodeB, home eNodeB or pico base station, based on transmission power and thereby also cell size. The radio network access node can be a Station (STA), which is any device that contains an IEEE 802.11-conformant Media Access Control (MAC) and Physical Layer (PHY) interface to the Wireless Medium (WM). The radio network access node may also be a base station corresponding to the fifth generation (5G) wireless systems. The first communication device 100 herein may also be denoted as a road side unit such as e.g. a road side unit in a V2X application. The road side unit may be any device/node deployed along roads to improve vehicular network performance, as well as extend the coverage. The road side unit may be a stand-alone device/node or may be integrated with e.g. a network access node.

Furthermore, any method according to implementations of the disclosure may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that implementations of the first communication device 100 and the second communication device 300 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the first communication device 100 and the second communication device 300 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

The scope of protection shall be defined by the appended claims.

## Claims

1. A first communication device (100) for a wireless communication system (500), the first communication device (100) being configured for groupcast communication with a set of second communication devices (300a, 300b,..., 300n), and further being configured to

   obtain one or more received signal qualities from respective one or more second communication devices of a reporting subset (300a', 300b',..., 300n') in the set of second communication devices (300a, 300b,..., 300n);
   determine at least one path loss value for the reporting subset (300a', 300b',..., 300n') based on the one or more obtained received signal qualities;
   wherein the reporting subset is smaller than the set of second communication devices such that the reporting subset comprises fewer second communication devices than the set of second communication devices; and
   wherein the first communication device is configured to define the reporting subset (300a', 300b',..., 300n') per beam, per beam pair link, or per QCL configuration.

2. The first communication device (100) according to claim 1, wherein the reporting subset (300a', 300b',..., 300n') is determined based on a configuration received from a network access node (550) or a road side unit (560).

3. The first communication device (100) according to claim 1 or 2, wherein the reporting subset (300a', 300b',..., 300n') is determined based on one or more received signal qualities received during a time window.

4. The first communication device (100) according to any one of the preceding claims, configured to determine a transmission power value for the groupcast communication based on the at least one path loss value.

5. The first communication device (100) according to claim 4, configured to perform a groupcast communication transmission based on the determined transmission power value.

6. The first communication device (100) according to claim 5, configured to perform the groupcast communication transmission in a physical sidelink control channel or in a physical sidelink shared channel.

7. The first communication device (100) according to any one of claims 4 to 6, configured to

   determine a single common path loss value for the reporting subset (300a', 300b',..., 300n') based on a first function and the received signal qualities; and
   determine the transmission power value based on the single common path loss value.

8. The first communication device (100) according to any one of claims 4 to 6, configured to

   determine a path loss value for each second communication device in the reporting subset (300a', 300b',..., 300n); and
   determine the transmission power value based on a second function and the path loss values for each second communication device in the reporting subset (300a', 300b',..., 300n').

9. The first communication device (100) according to any one of the preceding claims, configured to determine the reporting subset (300a', 300b',..., 300n') based on a spatial distance between the first communication device (100) and a second communication device in the reporting subset (300a', 300b',..., 300n') and a required transmission range.

10. The first communication device (100) according to claim 11, configured to
determine the reporting subset (300a', 300b',..., 300n') further based on a groupcast use case for the reporting subset (300a', 300b',..., 300n').

11. The first communication device (100) according to claim 9 or 10, configured to
transmit a measurement configuration (520) for the groupcast communication to at least one second communication device (300), wherein the measurement configuration (520) indicates at least one reporting condition.

12. The first communication device (100) according to any one of the preceding claims, wherein the received signal quality is at least one of:

a reference signal received power,
a signal-to-noise ratio, and
a reference signal received quality.

13. A method (200) for a first communication device (100) configured for groupcast communication with a set of second communication devices (300a, 300b,..., 300n), the method (200) comprising

obtaining (202) one or more received signal qualities from respective one or more second communication devices of a reporting subset (300a', 300b',..., 300n') in the set of second communication devices (300a, 300b,..., 300n);
determining (204) at least one path loss value for the reporting subset (300a', 300b',..., 300n') based on the one or more obtained received signal qualities;
wherein the reporting subset is smaller than the set of second communication devices such that the reporting subset comprises fewer second communication devices than the set of second communication devices; and
wherein the method further comprises defining the reporting subset (300a', 300b',..., 300n') per beam, per beam pair link, or per QCL configuration.

14. A computer program with a program code for performing a method according to claim 13 when the computer program runs on a computer.

**Patentansprüche**

1. Erste Kommunikationsvorrichtung (100) für ein drahtloses Kommunikationssystem (500), wobei die erste Kommunikationsvorrichtung (100) für die Groupcast-Kommunikation mit einer Menge von zweiten Kommunikationsvorrichtungen (300a, 300b, ..., 300n) konfiguriert ist und ferner zu Folgendem konfiguriert ist:

Erlangen einer oder mehrerer Empfangssignalqualitäten von jeweils einer oder mehreren zweiten Kommunikationsvorrichtungen einer Meldeteilmenge (300a', 300b', ..., 300n') in der Menge der zweiten Kommunikationsvorrichtungen (300a, 300b, ..., 300n);
Bestimmen mindestens eines Pfadverlustwerts für die Meldeteilmenge (300a', 300b', ..., 300n') auf Grundlage der einen oder mehreren erlangten Empfangssignalqualitäten;
wobei die Meldeteilmenge kleiner ist als die Menge der zweiten Kommunikationsvorrichtungen, derart, dass die Meldeteilmenge weniger zweite Kommunikationsvorrichtungen umfasst als die Menge der zweiten Kommunikationsvorrichtungen; und
wobei die erste Kommunikationsvorrichtung dazu konfiguriert ist, die Meldeteilmenge (300a', 300b', ..., 300n') pro Strahl, pro Strahlpaarverbindung oder pro QCL-Konfiguration zu definieren.

2. Erste Kommunikationsvorrichtung (100) nach Anspruch 1, wobei die Meldeteilmenge (300a', 300b', ..., 300n') auf Grundlage einer von einem Netzwerkzugangsknoten (550) oder einer straßenseitigen Einheit (560) empfangenen Konfiguration bestimmt wird.

3. Erste Kommunikationsvorrichtung (100) nach Anspruch 1 oder 2, wobei die Meldeteilmenge (300a', 300b', ..., 300n') auf Grundlage einer oder mehrerer während eines Zeitfensters empfangenen Empfangssignalqualitäten bestimmt wird.

**4.** Erste Kommunikationsvorrichtung (100) nach einem der vorhergehenden Ansprüche, die zu Folgendem konfiguriert ist:
Bestimmen eines Übertragungsleistungswerts für die Groupcast-Kommunikation auf Grundlage des mindestens einen Pfadverlustwerts.

**5.** Erste Kommunikationsvorrichtung (100) nach Anspruch 4, die zu Folgendem konfiguriert ist:
Durchführen einer Groupcast-Kommunikationsübertragung auf Grundlage des ermittelten Übertragungsleistungswerts.

**6.** Erste Kommunikationsvorrichtung (100) nach Anspruch 5, die zu Folgendem konfiguriert ist:
Durchführen der Groupcast-Kommunikationsübertragung in einem physischen Sidelink-Steuerkanal oder in einem physischen gemeinsam genutzten Sidelink-Kanal.

**7.** Erste Kommunikationsvorrichtung (100) nach einem der Ansprüche 4 bis 6, die zu Folgendem konfiguriert ist:

Bestimmen eines einzigen gemeinsamen Pfadverlustwertes für die Meldeteilmenge (300a', 300b', ..., 300n') auf Grundlage einer ersten Funktion und der Empfangssignalqualitäten; und
Bestimmen des Übertragungsleistungswerts auf Grundlage des einzigen gemeinsamen Pfadverlustwerts.

**8.** Erste Kommunikationsvorrichtung (100) nach einem der Ansprüche 4 bis 6, die zu Folgendem konfiguriert ist:

Bestimmen eines Pfadverlustwertes für jede zweite Kommunikationsvorrichtung in der Meldeteilmenge (300a', 300b', ..., 300n') ; und
Bestimmen des Übertragungsleistungswerts auf Grundlage einer zweiten Funktion und der Pfadverlustwerte für jede zweite Kommunikationsvorrichtung in der Meldeteilmenge (300a', 300b', ..., 300n').

**9.** Erste Kommunikationsvorrichtung (100) nach einem der vorhergehenden Ansprüche, die zu Folgendem konfiguriert ist:
Bestimmen der Meldeteilmenge (300a', 300b', ..., 300n') auf Grundlage einer räumlichen Entfernung zwischen der ersten Kommunikationsvorrichtung (100) und einer zweiten Kommunikationsvorrichtung in der Meldeteilmenge (300a', 300b', ..., 300n') und einer erforderlichen Übertragungsreichweite.

**10.** Erste Kommunikationsvorrichtung (100) nach Anspruch 11, die zu Folgendem konfiguriert ist:
Bestimmen der Meldeteilmenge (300a', 300b', ..., 300n') ferner auf Grundlage eines Groupcast-Anwendungsfalls für die Meldeteilmenge (300a', 300b', ..., 300n').

**11.** Erste Kommunikationsvorrichtung (100) nach Anspruch 9 oder 10, die zu Folgendem konfiguriert ist:
Übertragen einer Messkonfiguration (520) für die Groupcast-Kommunikation an mindestens eine zweite Kommunikationsvorrichtung (300), wobei die Messkonfiguration (520) mindestens eine Meldebedingung angibt.

**12.** Erste Kommunikationsvorrichtung (100) nach einem der vorhergehenden Ansprüche, wobei die Empfangssignalqualität mindestens eine der folgenden ist:

eine Leistungsaufnahme des Referenzsignals,
ein Signal-Rausch-Verhältnis und
eine Empfangsqualität des Referenzsignals.

**13.** Verfahren (200) für eine erste Kommunikationsvorrichtung (100), die für die Groupcast-Kommunikation mit einer Menge von zweiten Kommunikationsvorrichtungen (300a, 300b,..., 300n) konfiguriert ist, wobei das Verfahren (200) Folgendes umfasst Erlangen (202) einer oder mehrerer Empfangssignalqualitäten von jeweils einer oder mehreren zweiten Kommunikationsvorrichtungen einer Meldeteilmenge (300a', 300b', ..., 300n') in der Menge der zweiten Kommunikationsvorrichtungen (300a, 300b, ..., 300n);

Bestimmen (204) mindestens eines Pfadverlustwerts für die Meldeteilmenge (300a', 300b', ..., 300n') auf Grundlage der einen oder mehreren erlangten Empfangssignalqualitäten;
wobei die Meldeteilmenge kleiner ist als die Menge der zweiten Kommunikationsvorrichtungen, derart, dass die Meldeteilmenge weniger zweite Kommunikationsvorrichtungen umfasst als die Menge der zweiten Kommunikationsvorrichtungen; und

wobei das Verfahren ferner die Meldeteilmenge (300a', 300b', ..., 300n') pro Strahl, pro Strahlpaarverbindung oder pro QCL-Konfiguration umfasst.

14. Computerprogramm mit einem Programmcode zum Durchführen des Verfahrens nach Anspruch 13, wenn das Computerprogramm auf einem Computer ausgeführt wird.

**Revendications**

1. Premier dispositif de communication (100) pour un système de communication sans fil (500), le premier dispositif de communication (100) étant configuré pour une communication par diffusion de groupe avec un ensemble de seconds dispositifs de communication (300a, 300b, ..., 300n), et étant en outre configuré pour

obtenir une ou plusieurs qualités de signal reçu provenant d'un ou de plusieurs seconds dispositifs de communication respectifs d'un sous-ensemble de rapport (300a', 300b',..., 300n') dans l'ensemble de seconds dispositifs de communication (300a, 300b, ..., 300n) ;
déterminer au moins une valeur d'affaiblissement de parcours pour le sous-ensemble de rapport (300a', 300b', ..., 300n') sur la base de l'une ou de plusieurs qualités de signal reçu obtenues ;
dans lequel le sous-ensemble de rapport est plus petit que l'ensemble de seconds dispositifs de communication de sorte que le sous-ensemble de rapport comprend moins de seconds dispositifs de communication que l'ensemble de seconds dispositifs de communication ; et
dans lequel le premier dispositif de communication est configuré pour définir le sous-ensemble de rapport (300a', 300b', ..., 300n') par faisceau, par liaison de paire de faisceaux, ou par configuration QCL.

2. Premier dispositif de communication (100) selon la revendication 1, dans lequel le sous-ensemble de rapport (300a', 300b', ..., 300n') est déterminé sur la base d'une configuration reçue d'un nœud d'accès au réseau (550) ou d'une unité latérale routière (560).

3. Premier dispositif de communication (100) selon la revendication 1 ou 2, dans lequel le sous-ensemble de rapport (300a', 300b', ..., 300n') est déterminé sur la base d'une ou de plusieurs qualités de signal reçu reçues pendant un intervalle de temps.

4. Premier dispositif de communication (100) selon l'une quelconque des revendications précédentes, configuré pour déterminer une valeur de puissance de transmission pour la communication par diffusion de groupe sur la base de l'au moins une valeur d'affaiblissement de parcours.

5. Premier dispositif de communication (100) selon la revendication 4, configuré pour
effectuer une transmission de communication par diffusion de groupe sur la base de la valeur de puissance de transmission déterminée.

6. Premier dispositif de communication (100) selon la revendication 5, configuré pour
effectuer la transmission de communication par diffusion de groupe dans un canal de commande de liaison latérale physique ou dans un canal partagé de liaison latérale physique.

7. Premier dispositif de communication (100) selon l'une quelconque des revendications 4 à 6, configuré pour

déterminer une valeur unique commune d'affaiblissement de parcours pour le sous-ensemble de rapport (300a', 300b', ..., 300n') sur la base d'une première fonction et des qualités de signal reçu ; et
déterminer la valeur de puissance de transmission sur la base de la valeur unique commune d'affaiblissement de parcours.

8. Premier dispositif de communication (100) selon l'une quelconque des revendications 4 à 6, configuré pour

déterminer une valeur d'affaiblissement de parcours pour chaque second dispositif de communication dans le sous-ensemble de rapport (300a', 300b', ..., 300n') ; et
déterminer la valeur de puissance de transmission sur la base d'une seconde fonction et des valeurs d'affaiblissement de parcours pour chaque second dispositif de communication dans le sous-ensemble de rapport (300a', 300b', ..., 300n').

**9.** Premier dispositif de communication (100) selon l'une quelconque des revendications précédentes, configuré pour déterminer le sous-ensemble de rapport (300a', 300b', ..., 300n') sur la base d'une distance spatiale entre le premier dispositif de communication (100) et un second dispositif de communication dans le sous-ensemble de rapport (300a', 300b', ..., 300n') et une plage de transmission requise.

**10.** Premier dispositif de communication (100) selon la revendication 11, configuré pour
déterminer le sous-ensemble de rapport (300a', 300b', ..., 300n') en outre sur la base d'un cas d'utilisation par diffusion de groupe pour le sous-ensemble de rapport (300a', 300b', ..., 300n') .

**11.** Premier dispositif de communication (100) selon la revendication 9 ou 10, configuré pour
transmettre une configuration de mesure (520) pour la communication par diffusion de groupe à au moins un second dispositif de communication (300), dans lequel la configuration de mesure (520) indique au moins une condition de rapport.

**12.** Premier dispositif de communication (100) selon l'une quelconque des revendications précédentes, dans lequel la qualité de signal reçu est au moins l'une des suivantes :

une puissance reçue d'un signal de référence,
un rapport signal sur bruit, et
une qualité reçue d'un signal de référence.

**13.** Procédé (200) pour un premier dispositif de communication (100) configuré pour une communication par diffusion de groupe avec un ensemble de seconds dispositifs de communication (300a, 300b, ..., 300n), le procédé (200) comprenant

l'obtention (202) d'une ou de plusieurs qualités de signal reçu provenant d'un ou de plusieurs seconds dispositifs de communication respectifs d'un sous-ensemble de rapport (300a', 300b', ..., 300n') dans l'ensemble de seconds dispositifs de communication (300a, 300b, ..., 300n) ;
la détermination (204) d'au moins une valeur d'affaiblissement de parcours pour le sous-ensemble de rapport (300a', 300b', ...,
300n') sur la base de l'une ou de plusieurs qualités de signal reçu obtenues ;
dans lequel le sous-ensemble de rapport est plus petit que l'ensemble de seconds dispositifs de communication de sorte que le sous-ensemble de rapport comprend moins de seconds dispositifs de communication que l'ensemble de seconds dispositifs de communication ; et
dans lequel le procédé comprend en outre la définition du sous-ensemble de rapport (300a', 300b', ..., 300n') par faisceau, par liaison de paire de faisceaux, ou par configuration QCL.

**14.** Programme informatique avec un code de programme pour exécuter le procédé selon la revendication 13 lorsque le programme informatique s'exécute sur un ordinateur.

100

102 ⟷ 104 — 110

108

106

Fig. 1

200

202

204

Fig. 2

300

302

304

310

308

306

Fig. 3

400

402

404

406

Fig. 4

Fig. 5

600

```
┌─────────┐
│   602   │
└─────────┘
     │
     ▼
┌─────────┐
│   604   │
└─────────┘
     │
     ▼
┌─────────┐
│   606   │
└─────────┘
```

Fig. 6

700

```
┌─────────┐
│   702   │
└─────────┘
     │
     ▼
┌─────────┐
│   704   │◄───┐
└─────────┘    │
     │         │
     ▼         │
┌─────────┐    │
│   706   │────┘
└─────────┘
     │
     ▼
┌─────────┐
│   708   │
└─────────┘
```

Fig. 7

300d´, 300e´

| 100 | 300a | 300b | 300c | 300d | 300e |

Fig. 8a

300f´, 300g´, 300h´

| 100 | 300a | 300b | | 300h |
| | | 300c | | 300g |
| | | 300d | 300e | 300f |

Fig. 8b

Th1   TR   Th2

300d´, 300e´, 300f´

| | 300a | 300d | 300g |
| 100 | 300b | 300e | |
| | 300c | 300f | 300h |

Fig. 8c

Fig. 8d

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MCC SUPPORT ; RAN WG1.** Draft Report of 3GPP TSG RAN WG1 #98 v0.2.0 (Prague, Czech Rep, 26th - 30th August 2019). *3GPP DRAFT; DRAFT_MINUTES_REPORT_RAN1#98 V020, 3RD GENERATION PARTNERSHIP PROJECT (3GPP), MOBILE COMPETENCE CENTRE ; 650, ROUTE DES LUCIOLES ; F-06921 SOPHIA-ANTIP-OLIS CEDEX; FRANCE,* 11 September 2019, (Chongqing

- **MEDIATEK INC.** Physical layer procedures for side-link. *3GPP DRAFT; R1-1908401_V2X_PHYSICAL_LAYER_PROCEDU RE_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 17 August 2019, vol. RAN WG1 (Prague

- **CONVIDA WIRELESS.** On HARQ and Power Control for NR V2X Sidelink. *3GPP DRAFT; R1-1909420_ON_HARQ_POWERCONTRL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 17 August 2019, vol. RAN WG1 (Prague

- **INTERDIGITAL et al.** Physical Layer Procedures for NR V2X Sidelink. *3GPP DRAFT; R1-1909032 ON PHYSICAL LAYER PROCEDURES FOR NR V2X SIDELINK_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS,* 16 August 2019, vol. RAN WG1 (Prague